Europäisches Patentamt

**European Patent Office**

Office européen des brevets

(19)

(11) Numéro de publication: **0 001 278**

**A1**

(12) # DEMANDE DE BREVET EUROPEEN

(21) Numéro de dépôt: **78100921.2**

(22) Date de dépôt: **18.09.78**

(51) Int. Cl.²: **G 02 B 5/14**

(30) Priorité: **23.09.77 FR 7728706**

(43) Date de publication de la demande:
**04.04.79 Bulletin 79/7**

(84) Etats contractants désignés:
**CH DE FR GB NL SE**

(71) Demandeur: **Société Anonyme dite: LES CABLES DE LYON**
**170, avenue Jean Jaurès**
**F-69353 Lyon Cedex 2(FR)**

(72) Inventeur: **Gauthier, Francis**
**Eparvier**
**F-42410 Pelussin(FR)**

(72) Inventeur: **Comte, Georges**
**10, rue des Noyers**
**F-69005 Lyon(FR)**

(74) Mandataire: **Weinmiller, Jürgen et al,**
**Zeppelinstrasse 63**
**D-8000 München 80(DE)**

(54) **Procédé et dispositif de raccordement pour fibres optiques.**

(57) Procédé et dispositif permettant de raccorder deux fibres optiques entre elles.

Les fibres sont introduites dans un manchon (11) constitué d'un tube capillaire en verre ou en silice comportant au moins un étranglement dont la zone centrale possède un diamètre interne au plus égal à celui des fibres (22, 23).

Application aux fibres optiques.

FIG.2

EP 0 001 278 A1

## Procédé et dispositif de raccordement pour fibres optiques

La présente invention concerne un dispositif de raccordement de fibres optiques entre elles à l'aide d'un manchon formé par un tube capillaire en silice ou en verre aux extrémités duquel sont engagées les fibres optiques de part et d'autre, le diamètre interne initial du manchon étant légèrement supérieur au diamètre externe des fibres à raccorder.

Les fibres optiques constituent un moyen de transmission extrêmement prometteur pour les télécommunications, du fait de leurs pertes en ligne très réduites, en particulier pour la lumière infrarouge de longueurs d'ondes comprises entre 700 et 1200 nanomètres.

Toutefois de nombreux problèmes se posent encore pour leur utilisation, en particulier du fait des difficultés de raccordement des fibres entre elles avec un affaiblissement acceptable de la lumière transmise, difficultés provenant d'une part de la faiblesse des dimensions des fibres, dont le diamètre extérieur est de l'ordre d'une centaine de microns, et des écarts de diamètre extérieur des fibres qui empêchent un raccordement correct bout à bout de deux fibres adjacentes.

Le dispositif selon la présente invention a pour but de remédier à ces difficultés, et d'assurer un alignement précis des axes des fibres optiques à raccorder, même si les diamètres de ces fibres sont différents.

Un dispositif de raccordement de fibres optiques entre elles selon l'invention est caractérisé par le fait que la partie centrale du tube comporte au moins un étranglement dont la zone centrale, entre les extrémités des fibres à raccorder, possède un diamètre interne au plus égal à celui desdites fibres.

La présente invention a également pour objet un procédé de raccordement des fibres optiques entre elles, caractérisé par les étapes suivantes :

a/ un manchon formé par un tube capillaire en silice ou en verre dont le diamètre intérieur initial est légèrement supérieur au diamètre externe des fibres à raccorder est rétreint dans sa partie centrale de manière à former un étranglement central interne de diamètre légèrement inférieur à celui des fibres, et éventuellement deux étranglements latéraux étirés de part et d'autre dudit étranglement central, de diamètre interne légèrement supérieur à celui des fibres ;

b/ une colle liquide d'indice de réfraction très voisin de celui des fibres est injectée dans ledit manchon ;

c/ lesdites fibres à raccorder sont introduites par les extrémités du manchon, sont éventuellement guidées par lesdits étranglements latéraux et viennent buter sur ledit étranglement central ;

d/ on assure le durcissement de ladite colle.

En se référant aux figures schématiques 1 à 4 ci-jointes, on va décrire ci-après deux exemples de mise en oeuvre de la présente invention. Les mêmes éléments représentés sur plusieurs de ces figures portent sur toutes celles-ci les mêmes références.

La figure 1 représente la réalisation du manchon de raccordement selon une première variante.

La figure 2 représente le raccordement des fibres optiques dans le manchon de la figure 1.

La figure 3 représente la réalisation du manchon de raccordement selon une deuxième variante.

La figure 4 représente le raccordement des fibres optiques dans le manchon de la figure 3.

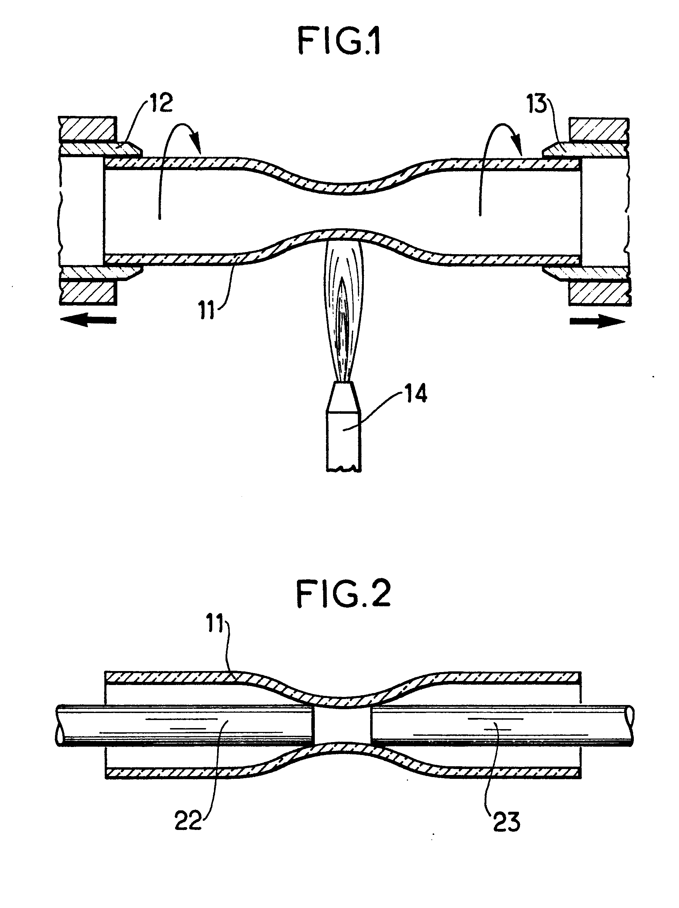

Dans sa version la plus simple représentée aux figures 1 et 2, on voit un manchon formé par un tube capillaire 11, de quelques centimètres au maximum de longueur, en verre ou en silice, et dont le diamètre intérieur est légèrement supérieur au diamètre externe de la plus grosse des deux fibres à raccorder. Dans une des versions proposées, ce manchon 11, serré aux deux extrémités entre deux pinces 12 et 13, est rétreint à l'avance au moyen d'une microflamme 14 et d'un banc de manipulation rotatif, de façon que le diamètre interne de sa partie centrale devienne inférieur à celui de la plus petite des deux fibres à raccorder, l'étranglement ainsi produit étant raccordé aux cylindres d'entrée et de sortie du manchon par des profils approximativement en forme de cônes aux extrémités plus ou moins arrondies.

Ce manchon 11 ainsi rétreint est ensuite rempli d'une colle liquide d'indice de réfraction très voisin de celui du coeur des deux fibres optiques 22 et 23 à raccorder et celles-ci sont introduites de part et d'autre du manchon par les deux cylindres d'entrée et de sortie de celui-ci, de sorte que l'extrémité de ces fibres vienne buter sur l'étranglement constitué par les cônes encadrant la zone centrale du tube, en ne laissant toutefois qu'un intervalle de quelques centièmes ou millièmes de millimètre entre les extrémités des deux fibres comme le montre la figure 2.

La colle choisie peut être soit du type époxyde ou isocyanate à un ou deux composants, soit de préférence une colle polymérisable sous l'action des rayons ultra-violets. Dans ce cas, il suffit après mise en place des fibres dans le manchon, d'exposer celui-ci quelques instants à la lumière d'une lampe U.V. pour que le raccordement soit définitivement réalisé.

Dans une seconde version possible de l'invention, le rétreint de la partie centrale du manchon n'est effectué qu'après la mise en place des deux fibres à l'intérieur du manchon, celui-ci jouant le rôle d'un simple manchon de raccordement. Si le tube est réalisé en un verre plus fusible que les fibres, le chauffage de la partie centrale suffit à assurer le rétreint du tube et l'immobilisation des deux fibres à raccorder tout en maintenant un bon centrage de l'une par rapport à l'autre, sans que l'emploi d'une colle soit nécessaire.

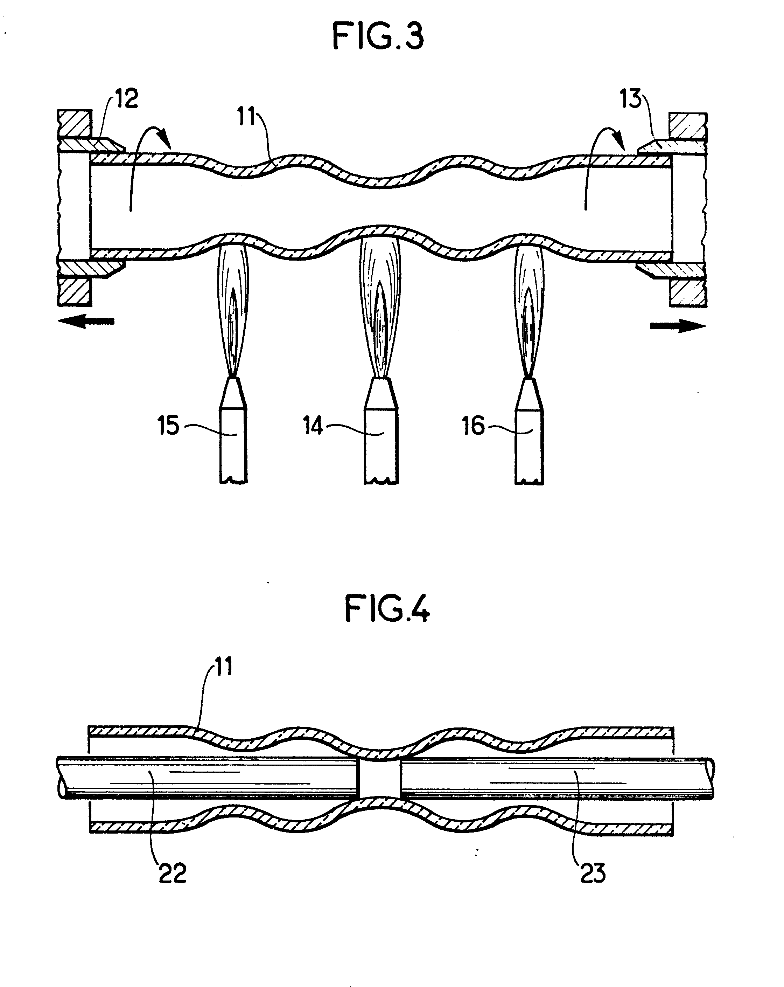

Dans une réalisation préférée de l'invention représentée en figures 3 et 4, le tube capillaire destiné au raccordement est rétreint à l'avance en trois points par trois flammes simultanées, ou bien successivement par une seule flamme de micro-chalumeau. Comme dans le premier cas, le diamètre intérieur de la zone centrale est réduit à une valeur légèrement inférieure au plus petit des diamètres externes des deux fibres à raccorder.

Par contre les étranglements situés de part et d'autre sont amenés à des diamètres internes encore légèrement plus grands que le plus grand diamètre externe des deux fibres à raccorder.

A titre d'exemple non limitatif, pour le raccordement de fibres de 125 microns de diamètre extérieur, le diamètre interne de l'étranglement central du manchon capillaire sera de l'ordre de 105 à 115 microns tandis que le diamètre interne des deux étranglements situés près des extrémités du tube sera de l'ordre de 140 à 150 microns. Bien entendu ces tolérances pourront être resserrées dans la mesure où le diamètre externe des fibres optiques à raccorder sera lui-même plus précis.

La figure 3 représente le dispositif qui permet de réaliser les étranglements nécessaires au centrage de la fibre : le manchon 11 est monté entre les pinces 12 et 13 d'un microtour de verrier (ou d'horloger). Ces pinces peuvent tourner ensemble autour de leur axe tout en se déplaçant l'une par rapport à l'autre avec un mouvement de translation le long de l'axe de la machine. Trois micro-chalumeau 14, 15 et 16 chauffent simultanément le tube capillaire en son centre et en deux points situés de part et d'autre de celui-ci, non loin des extrémités, pendant que les pinces exercent un mouvement de traction sur les extrémités du tube. Le chauffage de la zone centrale est légèrement plus fort que celui des zones situées de part et d'autre (qui sont chauffées de manière identique l'une de l'autre), de sorte que le verre (ou la silice) du tube commence à se ramollir et que les deux pinces s'écartent tout en continuant à tourner autour de leur axe, l'étranglement central prend un diamètre intérieur légèrement inférieur au diamètre externe de la plus petite des deux fibres à raccorder, tandis que les étranglements situés de part et d'autre sont légèrement plus grands que le diamètre externe des deux fibres à raccorder.

Cette disposition facilite beaucoup l'opération de raccordement, car les deux fibres se trouvent canalisées par les étranglements extrêmes et leurs faces terminales viennent se coincer face à face l'une de l'autre dans l'étranglement central comme le montre la figure 4. On est sûr que de cette façon les axes des deux fibres à raccorder restent bien alignés de sorte que les pertes de lumière à la jonction sont réduites au minimum. Bien entendu dans ce cas le manchon ainsi préparé à été rempli à l'avance d'une colle liquide durcissable ou polymérisable, de préférence en un temps très court sous l'action des rayons ultra-violets.

En variante, les opérations de resserrement du tube capillaire peuvent être effectuées non plus par traction ou rétreint lors du chauffage, mais par serrage dans un moule formé de deux demi-coquilles portant des empreintes correspondant au profil extérieur que l'on veut obtenir. Le moule peut être monté dans une pince tenue à la main ou intégré dans un dispositif mécanique solidaire des pinces maintenant les extrémités du tube capillaire. Cette opération sera faite aussi bien sur la version simplifiée décrite sur la figure 1 que sur la version à trois étranglements qui est l'objet de la figure 3.

- 1 -

REVENDICATIONS

1. Dispositif de raccordement de fibres optiques (22, 23) entre elles à l'aide d'un manchon (11) formé par un tube capillaire en silice ou en verre aux extrémités duquel sont engagées les fibres optiques de part et d'autre, le diamètre interne initial du manchon étant légèrement supérieur au diamètre externe des fibres à raccorder, caractérisé par le fait que la partie centrale du manchon (11) comporte au moins un étranglement dont la zone centrale, entre les extrémités des fibres (22, 23) à raccorder, possède un diamètre interne au plus égal au diamètre desdites fibres.

2. Dispositif de raccordement selon la revendication 1, caractérisé par le fait que le diamètre interne de la zone centrale de l'étranglement est légèrement inférieur au diamètre des fibres, et que ledit manchon est rempli d'une colle d'indice de réfraction très voisin de celui des fibres.

3. Dispositif de raccordement selon les revendications 1 ou 2, caractérisé par le fait qu'en plus dudit étranglement central de diamètre le plus faible, deux étranglements situés de part et d'autre dudit étranglement central possèdent un diamètre interne légèrement supérieur à celui des fibres et sont destinés au guidage de celles-ci lors de leur mise en place.

4. Procédé de raccordement de fibres optiques entre elles, à l'aide d'un manchon formé par un tube capillaire en silice ou en verre aux extrémités duquel sont engagées les fibres optiques de part et d'autre, le diamètre interne initial du manchon étant légèrement supérieur au diamètre externe des fibres à raccorder, caractérisé par les étapes suivantes :

a/ le manchon formé par un tube capillaire en silice ou en verre est rétreint dans sa partie centrale de manière à former un étranglement central de diamètre interne légèrement inférieur à celui des fibres ;

b/ une colle liquide d'indice de réfraction très voisin de celui des fibres est injectée dans ledit manchon ;

c/ lesdites fibres à raccorder sont introduites par les extrémités du manchon et viennent buter sur ledit étranglement central ;

d/ on assure le durcissement de la colle.

5. Procédé de raccordement selon la revendication 4, caractérisé par le fait que ledit étranglement est effectué par chauffage dudit manchon au moyen de micro-chalumeaux (14, 15, 16) avec rotation et tirage simultané du tube entre deux pinces (12, 13).

6. Procédé de raccordement selon la revendication 4, caractérisé par le fait que ledit étranglement est effectué par formage au moyen d'un moule à empreintes que l'on vient appliquer sur ledit manchon lors du chauffage.

7. Procédé selon l'une des revendications 4 à 6, caractérisé en ce que l'on forme en plus de l'étranglement central du manchon deux étranglements latéraux et part et d'autre dudit étranglement central, et de diamètre intérieur légèrement supérieur à celui des fibres.

8. Procédé selon l'une des revendications 4 à 7, caractérisé en ce que la colle liquide est polymérisable, et en ce que l'on assure sa polymérisation par un rayonnement ultra-violet.

# FIG.1

# FIG.2

2/2

0001278

# FIG.3

# FIG.4

Office européen
des brevets

**RAPPORT DE RECHERCHE EUROPEENNE**

| Catégorie | Citation du document avec indication, en cas de besoin, des parties pertinentes | Revendica-tion concernée |
|---|---|---|
| | FR - A - 2 237 209 (SIEMENS AKTIEN- GESELLSCHAFT) <br><br> * Page 2; figure 1 * | 1,2,4 |
| | FR - A - 2 337 888 (INTERNATIONAL STANDARD ELECTRIC) <br><br> * Revendications 1-7 et figures 1-3 * | 1,2,4, 5,8 |

## DOCUMENTS CONSIDERES COMME PERTINENTS

**CLASSEMENT DE LA DEMANDE (Int. Cl.²)**

G 02 B 5/14

**DOMAINES TECHNIQUES RECHERCHES (Int. Cl.²)**

G 02 B  5/14
C 03 B 37/10

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 28-11-1978 | MALIC |

OEB Form 1503.1   06.78